# EUROPEAN PATENT SPECIFICATION

(11) **EP 3 400 251 B1**
(45) Date of publication and mention of the grant of the patent: **27.10.2021**
(21) Application number: 16788006.1
(22) Date of filing: 15.09.2016
(51) Int. Cl.: C08L 75/04, A47C 27/04, A47C 27/14, C08J 9/00, C08L 93/00, C08G 18/20, C08G 18/48, C08G 18/16, C08G 18/76, C08G 18/24, C08G 18/40, C08G 101/00, C08G 18/63

(54) **POLYURETHANE FOAM**
POLYURETHANSCHAUM
COMPOSITION DE MOUSSE DE POLYURÉTHANE

(30) Priority: 07.01.2016 BG 320416; 22.06.2016 BG 353216; 07.09.2016 BG 11237416
(43) Date of publication of application: 14.11.2018
(73) Proprietor: Ted-Bed JSC, Plovdiv 4000 (BG)
(72) Inventor: KOSTOV, Hristiyan, 7058 Marten Ruse (BG); RUPCHEV, Stephan, Veliko Tarnovo (BG)
(74) Representative: Ivanov, Ivan Nikolov
(86) International application number: PCT/BG2016/000022
(87) International publication number: WO 2017/117637

(56) References cited:
- WO-A1-2004/063088
- WO-A1-2012/137128
- DE-U1- 20 118 127
- DATABASE WPI Week 200430 Thomson Scientific, London, GB; AN 2004-325859 XP002764498, & KR 2003 0081245 A (CHIN YANG CO LTD) 17 October 2003 (2003-10-17)

## Description

### Field of the invention

The invention relates to a polyurethane composition, which is used for the manufacture of products for the industry and households, in particular in the manufacturing of mattresses, sofas, seats, chairs, and underwear.

### Prior state of the art

It is known that polyurethanes are a widely used group of polymers. They are used as structural materials in many fields of industry due to their strength and durability.

It is known that for the formation of polyurethane foam are used polyether polyvalent alcohols and organic diisocyanates, which are bound to each other by a urethane bond and at the same time the organic diisocyanates react with a foaming agent, usually water to generate carbon dioxide gas. This causes the formation of foam. Traditionally, organoamines or organometallic compounds are used as catalysts of the process. Silicone surfactants may be used for stabilization of polyurethane. It is also known that in the production process, various fillers, additives, and colorants may be added to the mixture for the preparation of polyurethane (GB967441, WO2007146351, EP1559734).

American patent US 4937273 protects flexible polyurethane foams, containing as an additive inorganic antibacterial agents - zeolite or activated carbon with silver, zinc or copper ions adsorbed on them. Inorganic antibacterial agents are preferably used in the form of powder with an average particle diameter from 0.1 to 1 µm.

American patent application US2007287002 refers to a mattress made of polyurethane foam, comprising the addition of flavoring, incorporated therein, whole leaves, leaf pieces or leaf powder of lavender, chamomile, rose, green tea, peppermint, jasmine, sage, or combinations thereof.

American patent US8366757 protects polyurethane or high elastic foam for mattresses, pillows or mats for sport, which emit infrared radiation and/or ions. In addition to the base material, prior to treatment by standard techniques, such as molding, extrusion and other known practices, these include ground to a fine powder materials such as tourmaline, granite porphyry, quartz porphyry, zeolite, perlite, minerals serpentine or mixtures thereof. The invention also provides for the possibility of using additional additives of fine particles of other inorganic materials selected from aluminum, ferrite, copper, chromium oxide, titanium oxide, zirconium dioxide and silica dioxide, which also emit or amplify the effect of the additives and a possibility to use additives in order to provide additional effects such as: anti-mould, anti-fungal, deodorant, perfume.

Patent application CN101457017 refers to a polyurethane composition for interior products, deodorizing, antibacterial and applicable for the prevention of diseases, including polyols and organic polyisocyanates, foaming agent, a catalyst, a polymerization initiator and a stabilizer, to which are added anion additives of ultrafine powders of natural opal or tourmaline, dispersed in the polyurethane forming mixture, as well as other additives such as softeners, colouring agents, fixing agents, thickeners and wetting agents.

A published International patent application WO2012/137128 discloses an invention for creation an actively heated product (e.g. a mattress, pillow, blanket, slippers, item of clothing,), comprising: double frame with bags filled with natural amber filling on one side; actively heated semi-rigid panels inserted between the two sides/sectors of the frame; retainers to secure the product closely adjacent to a human body (e.g. to the back), and special electric power supply to heat and maintain a required temperature in the above mentioned heated semi-rigid panel for a required period of time. The invention was intended for heating natural amber contained in the above mentioned product to the optimum temperature of 26-40°C by employing a special power supply and putting the frame part with actively heated amber filling closely adjacent or at a certain distance (a couple of cm) to a human body; with the aim to : heat natural amber to the temperature at which amber starts to radiate ions, the radiation and effect of which intensify significantly after the temperature of natural amber reaches 26-40°C, and which positively stimulate energy points and channels of a human body, function of nerve centres, transmission of nerve impulses, cellular activity, metabolism etc.; and induce electromagnetic field around amber by biologically active electromagnetic field of a human (hereinafter - biological field of a humane) and initiate interaction between biological field of a human and the induced biological field created by human around amber, with Human's biological field positively responding to such an interaction (tranquilizing, yet stimulating) and directly influencing nerve/reflex centres and energy channels The main purpose of this invention is to create a polyurethane end composition with versatile application, possessing properties beneficial to health, such as stimulating metabolism, relieving asthmatic and allergic respiratory problems, helping the overcoming of physical pain, and eliminating negative energy.

### Technical disclosure of the invention

In nowadays humans tend to turn to nature and its naturalness more often: nature is the place to look for answers to numerous questions, the place to find new natural and effective methods of improving physical and spiritual health. Natural amber is a noteworthy and still not fully discovered material. Most scientists agree that amber is an amorphous natural derivative of organic nature. Amber is a solidified derivative of resin secreted by Pinus Succinifera or other species of pine tree millions of years that resembles a mineral. Amber contains about 8% of amber acid (has been used in pharmacology since ancient times), as well as various other additives. Most scientists and people working with amber propose that amber can improve biophysical aspects of human organism and separate organs, improve healing of tissues and organs and functioning of central nervous and digestive systems. It has been noticed that under the influence of amber, the number of inflammatory, degenerative processes in joints and top layers of skin tends to decrease, ear, eye, stomach and tooth pain is suppressed, rheumatism is treated. Moreover, doctors used amber for treating children that had suffered from Chernobyl catastrophe and were largely subject to thyroid disorders. Hence, we has created a polyurethane foam composition according to the description, consisting of polyurethane foam, formed of a composition comprising at least one polyol and at least one organic polyisocyanate, catalyst, foaming agent, a polymerization initiator and a stabilizer, to which was added powdered amber or powdered amber resins with predetermined size of the particles ranging from 1 to 3000 µ and more often in an amount of 0,1 to 10 % by weight **of the polyurethane composition** The polyurethane foam composition according to the invention may also include other additives, such as substances - cell openers, one or more non-combustible compounds, colorants, fillers, antimicrobial agents, crosslinking agents, chain extenders, lubricants, antistatic agents, reactive polyurethane pigments and other additives.

The polyurethane foam according to the invention is formed according to established and conventional processing techniques, but with addition of the powdered amber or powdered amber-like resin to the polymerization mixture under continuous stirring, before expansion or after being mixed with glue or other binding substances, it is sprayed as a layer in the already finished polyurethane product.

The polyurethane foam according to the invention has characteristics beneficial for the health such as stimulating metabolism, relieving asthmatic and allergic respiratory problems, helping the overcoming of physical pain and eliminating negative energy, among others including a wide range of density, elasticity and hardness.

### Examples of the preferred embodiments of the invention

The current invention is illustrated by the following exemplary embodiments:

### Example 1

Plyurethane foam was prepared by using the following starting components:

| Starting components | Quantity in weight parts/kg |
|---|---|
| Polyether polyol triol with a hydroxyl number 56 and molecular mass 3000 g/mol | 100 |
| Toluene 2,4-diisocyanate and Toluene 2,6-diisocyanate in a ratio of 80:20 | 60 |
| Water | 5 |
| Tin (II) - 2-ethythexanoate | 0,37 |
| Triethyfenediamine in dipropylene | 0,236 |
| Silicone | 1,20 |
| Pigment | 0,05 |

All raw materials for the preparation of the polyurethane foam are tempered at a temperature of 25°C. In a mixer equipped with a stirrer, were dosed the necessary amounts of the polyether polyol triol, water, tin (II)- 2-ethylhexanoate, triethylenediamine in dipropylene glycol, silicon, and pigment. To the homogenized mixture in the mixer it was dosed additionally 2 parts by weight/kg powdered amber with particle size of 70 µ, after which was added the tempered at a temperature of 25°C mixture of toluene 2,4- diisocyanate and toluene 2,6- diisocyanate in a ratio of 80:20, which starts the reaction for the preparation of polyurethane foam. The mixture is dispensed into a mold which is placed in a vacuum chamber where it expands for 70 s under vacuum 18 kPa, and then the expansion continues for 30 s at atmospheric pressure.

### Example 2

Polyurethane foam was prepared by using the following starting components:

| Sorting components | Quantity in parts by weight/kg |
|---|---|
| Polyether polyol triol with hydroxyl number 56 and molecular mass of 3000 g/mol | 70 |
| Polyether polymer polyol based on glycerol, propylene oxide, ethylene oxide (from 50.00 to 60.00%) with a copolymer of styrene with acrylonitrile (from 40.00 to 50.00%) with hydroxyl number 28 | 30 |
| Toluene 2.4 diisocyanate and toluene 2.6 diisocyanate in a ratio of 80:20 | 41,7 |
| Water | 3,0 |
| Tin (II)- 2-ethylhexanoate | 0,18 |
| Triethylenamine in dipropyleneglycol | 0,20 |
| Silicone | 1,00 |
| Pigment | 0,05 |

The raw materials for the preparation of the polyurethane foam were tempered at a temperature of 25°C and mixed according to the method described in Example 1. To the mixture was added powdered amber with particle size of 70 µ in an amount of 4 parts by weight/kg.

The resulting mixture was dosed into a mold and the expansion took place in a vacuum chamber in which vacuum 67 kPa for 100 s is maintained, and then it continued at atmospheric pressure for 90 s.

The resulting polyurethane foam had a volume weight (density) of 30±2 kg/m³; hardness 4.0±1 kPa, and elasticity 42% according to the Ball rebound test.

### Example 3

Polyurethane foam was prepared by using the following starting components:

| Starting components | Quantity in parts by weight/kg |
|---|---|
| Polyether polyol triol with hydroxyl number 56 and molecular mass of 3000 g/mol | 65 |
| Polyether polymer polyol based on glycerol, propylene oxide, ethylene oxide (from 50.00 to 60.00%) with copolymer of styrene with acrylonitrile (from 40.00 to 50.00%) with hydroxyl number 28 | 30 |
| Polyether polyol based on glycerol, propylene oxide, ethylene oxide with 75% content of ethylene oxide highly effective, (Cell Opener), hydroxyl number 33 | 5 |
| Toluene- 2,4- diisocyanate and toluene- 2,6-diisocyanate in a ratio of 80:20 | 45,8 |
| Water | 3,5 |
| Tin (II)- 2-ethylhexanoate | 0,28 |
| Triethylenamine in dipropyleneglycol | 0,12 |
| Silicone | 0,78 |
| Pigment | 0,05 |

The raw materials for the preparation of the polyurethane foam were tempered and mixed according to the method described in Example 1. To achieve the desired health effect of the impact on the user, to the mixture was added powdered amber with particle size of 70 µ in an amount of 2.7 parts by weight/kg.

The resulting mixture of raw materials was dosed into a mold and expanded at atmospheric pressure.

The resulting polyurethane foam had a volume weight of 36±2 kg/m³ and hardness 2±1 kPa.

### Example 4

Polyurethane foam was prepared by using the following starting components:

| Starting components | Quantity in parts by weight/kg |
|---|---|
| Polyether polyol triol with hydroxyl number 56 and molecular mass of 3000 g/mol | 5 |
| Polyether polyol based on glycerol, propylene oxide with hydroxyl number 241.9 and molecular weight of 755 g/mol | 90 |
| Polyether polyol based on glycerol, propylene oxide, ethylene oxide with content of ethylene oxide 75% highly effective (Cell Opener) | 5 |
| Toluene 2.4 diisocyanate and toluene 2.6 diisocyanate in a ratio of 80:20 | 27 |
| Water | 1,0 |
| Tin (II)- 2-ethylhexanoate | 0,009 |
| Triethylenamine in dipropyleneglycol | 0,46 |
| Silicone | 0,45 |
| Pigment | 0,05 |

The raw materials for the preparation of the polyurethane foam were tempered and mixed according to the method described in Example 1. In order to achieve the desired health effect of the impact on the user, to the mixture was added powdered amber with particle size of 70 µ in an amount of 6 parts by weight kg.

The resulting mixture of raw materials was dosed into a mold and expanded at atmospheric pressure.

The resulting polyurethane foam had a volume weight of 80±2 kg/m3 and hardness 2,0±1 kPa.

### Example 5

Powdered Amber with a particle size of any value in the range of 1 to 170 µ was mixed with appropriate glue. The mixture was stirred by means of a double diaphragm pump with complete recirculation until reaching homogeneous mixture. The resulting mixture was sprayed in the shaped polyurethane product by pistol model Finex.

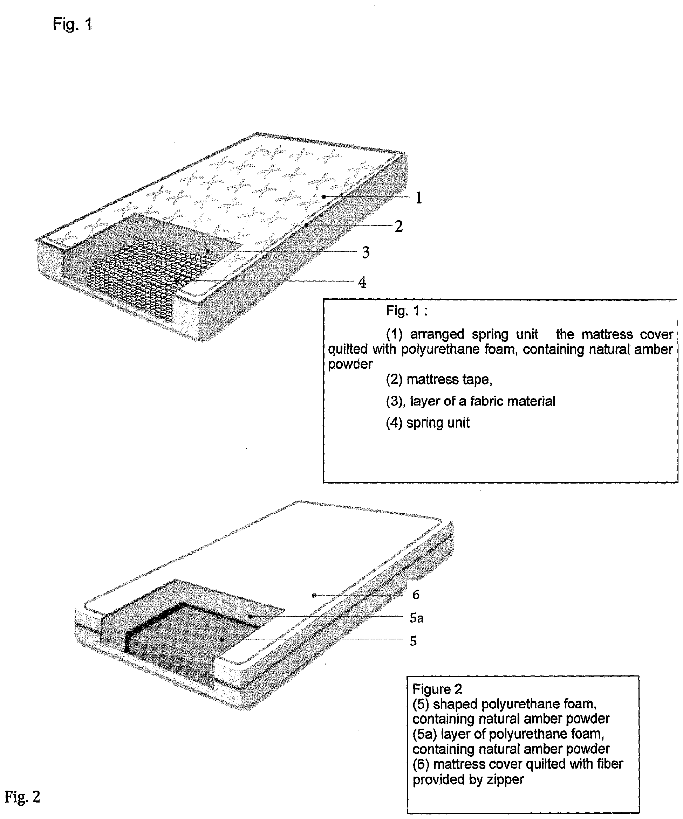

Fig. 1 depicts a scheme of a mattress made of the polyurethane foam composition, filled with natural powdered amber according to the invention and used for disease prevention, health enhancing treatment and therapy of common disorders. The amber mattress as in Fig. 1 consists of: arranged spring unit (4), covered by layer of a fabric material ((3), which is covered by the mattress cover quilted with polyurethane foam, containing natural powdered amber (1) wherein the appropriate shape was provided by the mattress tape (2) positioned along the top and bottom edges of the mattress. Fig. 1 provides the overview of a mattress (1) for a person to lie on the back and perform prevention/healing treatment via the back area. Nevertheless, the same ideas, principles and knowledge may be applied to create a variety of other active products with natural amber e.g. a pillow, blanket, belt, band, etc.
Fig. 2 depicts a scheme of a mattress made of polyurethane foam composition, filled with natural amber powder according to the invention and used for disease prevention, health enhancing treatment and therapy of common disorders. The mattress as in Fig 2 consists of shaped polyurethane foam (5), and upon which foam layer (5a), containing natural amber powder, according to the invention, covered by mattress cover quilted with fiber (6) provided by zipper along the middle part of all side walls .

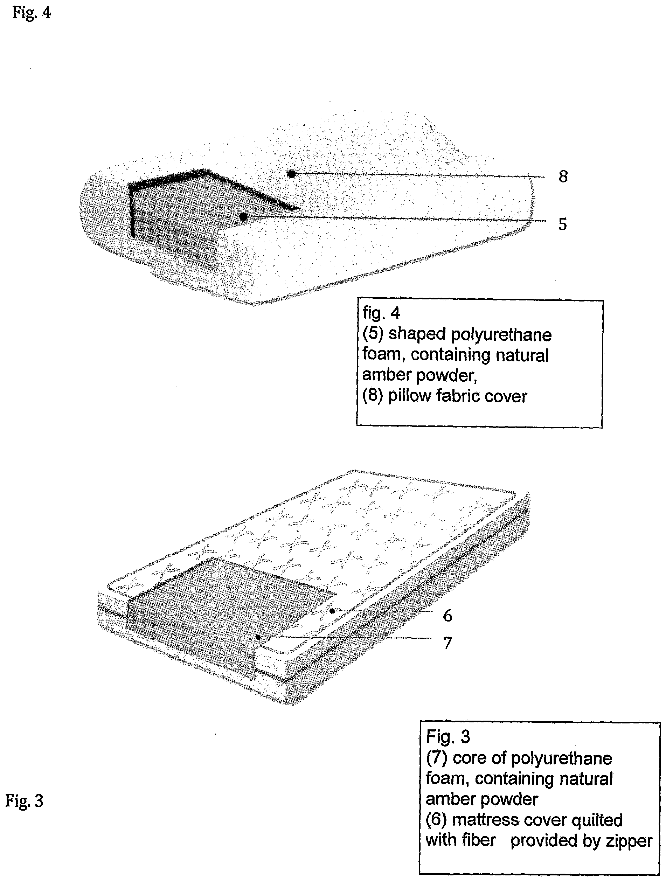

Fig. 3 provides the overview scheme of a mattress, composed of core of polyurethane foam (7) covered by mattress cover quilted with fiber (6) provided by zipper along all side walls.
Fig. 4 depicts an active pillow made of the polyurethane foam composition with natural amber powder, according to the invention to put close to the human's body (for a person to lie on/put his head on) and perform preventive treatment, health enhancing treatment and therapy of common disorders . For example, in this case, the product (the pillow) is intended to be used for everyday preventive/healing process. The pillow according to the fig. 4 consists of a shaped polyurethane foam (5), containing natural amber powder, according to the invention, covered by a pillow fabric cover (8)

The essence of the invention is the product (a structure ) that combines:
- the property of natural amber more particularly powdered amber or powdered amber-like resins to radiate ions that positively influence a human's organism;
- ability of a human (living organism) to induce a field around amber with his own biological field, where the human (or the animal) positively responds to the effect of electromagnetic field (including other components, if any) created around powdered amber or powdered amber-like resins;
- The designed product (a mattress, pillow, blanket,) is very comfortable and safe, relatively soft, can be of any shape, can be used in sitting, semi-lying and lying, as well as side-lying position.

The essential uniqueness of the invention:
- the product contains natural amber in the form of powdered amber or powdered amber-like resins;
- natural amber used in the product as powdered amber or powdered amber-like resins may actively heated by the body tempriture, only;
- the product is easy to use and affordable:
- - does not require any special storage condition;
- lightweight;
- relatively inexpensive;
- does not smell (compared with other amber product of the same order);
- the therapy procedure can be performed at home, in a calm environment and at a convenient time;
- safe to use;

In order to illustrate and describe the invention, description of the most preferred embodiment options is provided hereinabove. This invention does not require particular steps to be detailed performed and does not limit a claim to a particular structure. The above description shall be regarded as an illustration rather than a limitation. The described embodiments have been selected and described with the aim to assist the specialists in the art in exploring the principles of the invention and its practical application. It has been anticipated that the scope of invention is defined by the enclosed claim and its equivalents containing the terms that are used in the widest scope of meaning, unless stated otherwise. It has been acknowledged that embodiments described, may provide amendments that do not deviate from the scope of the invention as stated in the claim hereinafter.

## Claims

1. A polyurethane foam composition based on polyol, organic polyisocyanate, catalyst, foaming agent, polymerization initiator, stabilizer and additives, **characterized by** that it contains powdered amber or powdered amber resin with particle size **within the range of 1 to 3000 µ**.

2. Composition, according to claim 1, **characterized in that** the powdered amber or powdered amber resin is in an amount of 0,1 to 10% by weight **of the polyurethane composition.**

3. Use of the composition, according to any one of the previous claims in production of a mattress, pillow, blanket.

## Patentansprüche

1. Polyurethanschaumzusammensetzung auf Basis von Polyol, organischem Polyisocyanat, Schäumungsmittel, Polymerisationsinitiator, Stabilisator und Additiven, **dadurch gekennzeichnet, dass** sie Bernsteinpulver oder Bernsteinharz mit einer Teilchengröße **im Bereich von 1 bis 3000 µ** enthält.

2. Zusammensetzung nach Anspruch 1, **dadurch gekennzeichnet, dass** das Bernsteinpulver oder das Bernsteinpulverharz in einer Menge von 0,1 bis 10 Gew.-% der Polyerethanzusammensetzung vorliegt.

3. Verwendung der Zusammensetzung nach einem der vorhergehenden Ansprüche bei der Herstellung einer Matratze, eines Kissens, einer Decke.

## Revendications

1. Composition de mousse de polyuréthane à base de polyol, de polyisocyanates organiques, de catalyseur, d'agent moussant, d'initiateur de polymérisation, de stabilisateur et d'additifs, **caractérisée en ce qu'**elle contient de l'ambre en poudre ou de la résine d'ambre en poudre dont la taille des particules est comprise entre 1 et 3000 µ.

2. Composition, selon la revendication 1, **caractérisée en ce que** l'ambre en poudre ou la résine d'ambre en poudre est en une quantité de 0,1 à 10% en poids de la composition de polyuréthane.

3. Utilisation de la composition, selon l'une quelconque des revendications précédentes dans la fabrication de matelas, d'oreiller, de couverture.
